Europäisches Patentamt

European Patent Office

Office européen des brevets

(11) Numéro de publication : **0 031 766**
**B1**

# (12) FASCICULE DE BREVET EUROPÉEN

(45) Date de publication du fascicule du brevet :
01.06.83

(21) Numéro de dépôt : 80401821.6

(22) Date de dépôt : 18.12.80

(51) Int. Cl.³ : **G 21 C 7/04**

(54) **Crayon de matériau consommable pour le pilotage d'un réacteur nucléaire.**

(30) Priorité : 21.12.79 FR 7931400

(43) Date de publication de la demande :
08.07.81 Bulletin 81/27

(45) Mention de la délivrance du brevet :
01.06.83 Bulletin 83/22

(84) Etats contractants désignés :
BE CH DE GB IT LI

(56) Documents cités :
DE A 1 439 924
FR A 1 565 786
FR A 2 384 323
GB A 1 152 305
GB A 2 019 076

(73) Titulaire : **Framatome**
**Tour Fiat 1 place de la Coupole**
**F-92400 Courbevoie (FR)**

(72) Inventeur : **Decarsin, Michel**
**27, petite rue de la Doua**
**F-69100 Villeurbanne (FR)**

(74) Mandataire : **Dupuy, Louis et al**
**CREUSOT-LOIRE 15 rue Pasquier**
**F-75383 Paris Cedex 8 (FR)**

Crayon de matériau consommable pour le pilotage d'un réacteur nucléaire

La présente invention concerne un crayon de matériau consommable destiné au pilotage d'un réacteur nucléaire, et s'applique plus particulièrement, à titre d'exemple, aux crayons dits « de poison consommable ».

De façon courante le combustible disposé dans le cœur d'un réacteur nucléaire est contenu dans des gaines allongées habituellement appelées « crayons », eux-mêmes regroupés parallèlement en des assemblages manipulés en bloc pendant les opérations de chargement ou de déchargement du cœur. Dans ces assemblages, où les crayons sont maintenus par des grilles entretoises, des emplacements vides sont réservés pour recevoir des organes de même forme générale que les crayons combustibles, mais qui peuvent être introduits à la demande dans les assemblages et parmi les crayons combustibles selon les nécessités de la conduite du réacteur. Il s'agit là par exemple de sources neutroniques utilisées au démarrage pour amorcer les réactions nucléaires, ou encore de produits absorbants qui, disposés sélectivement en certains emplacements du cœur, permettent de réduire la réactivité initiale et facilitent le pilotage.

Le produit absorbant est le plus souvent du bore dont l'un des isotopes, irradié par des neutrons, se transforme en lithium avec dégagement gazeux d'hélium, si bien que la capacité d'absorption diminue progressivement.

Dans les crayons connus le poison consommable se présente généralement sous forme d'éléments tubulaires en verre boraté, empilés entre une gaine extérieure et un tube interne, réalisés l'un et l'autre en acier inoxydable ou en alliage de zirconium. Les éléments empilés ne remplissent d'ailleurs qu'une partie du volume interne de la gaine, de façon à réserver une chambre d'expansion pour les gaz dégagés pendant la réaction. Dans ces crayons de type connu les éléments empilés sont maintenus en position dans la gaine, soit à la partie inférieure en butée sur le bouchon inférieur, soit à la partie supérieure en butée sur le bouchon inférieur, soit à la partie supérieure en butée sur le bouchon supérieur avec ou sans interposition d'une entretoise, au moyen de ressorts à boudin.

Mais l'utilisation de ressorts pose des problèmes importants. Lors du montage en fabrication par exemple du ou des tubes de verre boraté, certains de ceux-ci peuvent se briser, par exemple si l'effort de pression exercé par le ressort est trop important. De même si le tarage du ressort est insuffisant les éléments empilés ne sont pas suffisamment tenus, ce qui présente des risques lors des opérations de manipulation ou en cours de fonctionnement dans le cœur. Enfin, il est difficile d'obtenir des ressorts satisfaisant aux exigences de comportement sous irradiation, et en particulier résistant aux phénomènes de relaxation dans ces conditions de fonctionnement.

L'invention permet d'éviter les inconvénients dus à l'utilisation de ressorts, et permet en outre de mieux adapter la répartition du produit consommable dans le crayon aux nécessités de son action.

L'invention s'applique donc à un crayon de matériau consommable pour le pilotage d'un réacteur nucléaire, constitué par une gaine extérieure fermée par un bouchon à chacune de ses deux extrémités, et comportant un tube axial interne formant un espace annulaire dans lequel sont disposés les matériaux consommables sous forme de tubes ou de pastilles annulaires ; selon l'invention, sur au moins une partie de la longueur du crayon, le matériau consommable est maintenu en place axialement par au moins une butée constituée par une déformation des parois de l'espace annulaire, conduisant à une réduction locale de la section de celui-ci.

L'invention sera mieux comprise en se référant à des modes de réalisation particuliers donnés à titre d'exemples et représentés par les dessins annexés.

Les figures 1 et 2 montrent, dans un premier mode de réalisation, deux crayons réalisés selon l'invention, respectivement avec le matériau consommable disposé en bout ou dans une partie plus centrale du crayon.

Les figures 3 et 4 montrent, dans les mêmes conditions, une variante de réalisation.

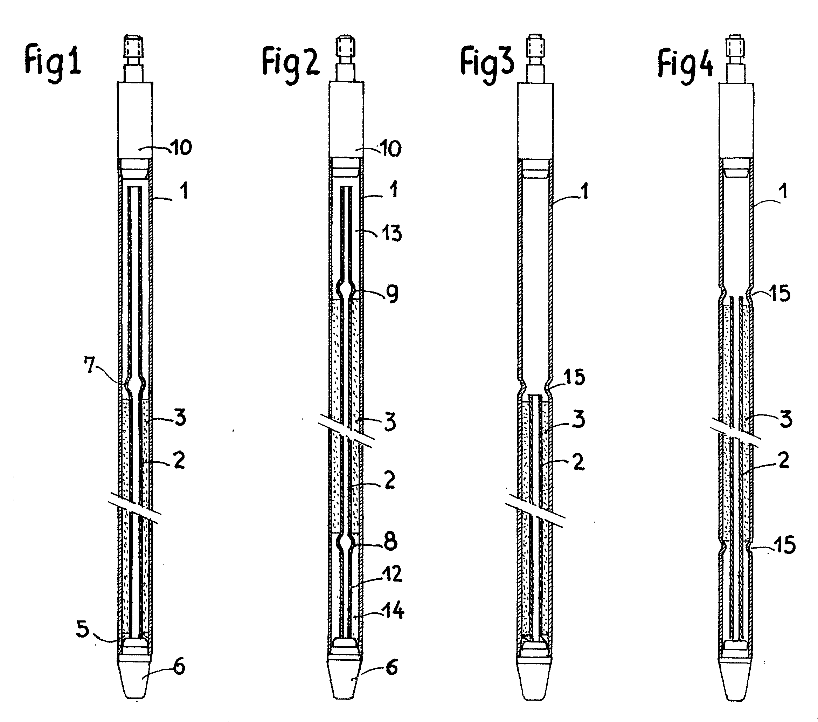

On verra sur les figures 1 et 2 que le crayon est constitué de façon usuelle par une gaine extérieure 1 en acier inoxydable ou en alliage de zirconium, avec un tube entretoise intérieur central 2, également en acier inoxydable ou en alliage de zirconium. Le matériau absorbant consommable 3 du type verre boraté ou tout autre matériau susceptible de jouer le même rôle, est disposé dans l'espace annulaire entre les tubes 1 et 2, sous forme d'un tube continu extrudé ou usiné, ou sous forme d'un empilement de pastilles annulaires.

Dans la disposition selon la figure 1, le produit 3 est bloqué en translation axiale entre un épaulement 5 du bouchon inférieur 6, et une déformation 7 obtenue par expansion locale du tube interne 2. Sur la figure 2 le matériau est bloqué entre deux déformations 8 et 9 du tube 2. Bien entendu, ces déformations 7, 8 ou 9, ainsi que la mise en place des bouchons d'extrémité 6 et 10, sont réalisés avant ou après la mise en place du matériau 3, selon le processus, utilisé pour le garnissage du crayon.

On pourra tout d'abord noter que l'on a ainsi réalisé l'immobilisation du matériau 3 dans le crayon sans utiliser de ressorts dont la tenue en service sous irradiation est souvent mal connue.

On notera en outre que, dans le cas de la figure 2, on est devenu maître de la position axiale du matériau 3 sur la hauteur de crayon, sans encombrer et donc sans limiter par des volumes morts les espaces constituant la ou les chambres d'expansion des gaz dégagés. On pourrait d'ailleurs aussi prévoir, dans la partie basse du tube 2, quelques orifices 12 permettant un équilibrage entre les chambres d'expansion 13 et 14 de part et d'autre du matériau 3, par l'intermédiaire du tube interne 2.

Le choix de la position axiale du matériau peut être utile pour mieux moduler son action absorbante, et l'on pourrait aussi concevoir de fractionner la masse de ce matériau entre plusieurs zones séparées par des déformations analogues du tube 3, et par des chambres d'expansion intermédiaires, celles-ci pouvant alors encore être mises en équilibre par quelques orifices dans la paroi du tube 2.

On retrouvera sur les figures 3 et 4 une disposition tout-à-fait analogue respectivement aux figures 1 et 2, mais ici le blocage axial du matériau 3 est obtenu par des déformations locales 15 de la gaine extérieure 1, obtenues par exemple par pincement ou par roulage de celle-ci.

Bien entendu l'invention n'est pas strictement limitée aux modes de réalisation qui viennent d'être décrits à titre d'exemples, mais elle couvre également les réalisations qui n'en différeraient que par des détails, par des variantes d'exécution, ou par l'utilisation de moyens équivalents.

On pourrait ainsi facilement concevoir que le blocage axial du matériau 3 soit obtenu à la fois par une déformation locale d'expansion du tube intérieur 2 comme sur les figures 1 et 2, et par une déformation de pincement de la gaine extérieure 1 comme sur les figures 3 et 4.

L'invention s'appliquerait également de la même façon pour certains types de crayon dans lesquels on a prévu un passage libre par le tube intérieur 2, ceci étant obtenu de façon courante en prévoyant également des canaux axiaux correspondants dans les deux bouchons d'extrémité.

Enfin l'invention n'est pas limitée aux crayons destinés à recevoir des matériaux constituant un poison consommable, mais elle s'appliquerait aussi de la même façon pour des crayons destinés à recevoir des sources neutroniques primaires ou secondaires telles qu'on les utilise lors du démarrage d'un réacteur.

## Revendications

1. Crayon de matériau consommable pour le pilotage d'un réacteur nucléaire, constitué par une gaine tubulaire externe (1) fermée par un bouchon (6, 10) à chacune de ses deux extrémités, et comportant un tube axial interne (2) formant un espace annulaire dans lequel sont disposés les matériaux consommables (3) sous forme de tubes ou de pastilles annulaires, caractérisé par le fait que sur au moins une partie de la longueur du crayon, le matériau consommable (3) est maintenu en place axialement par au moins une butée constituée par une déformation (8, 9, 15) des parois de l'espace annulaire, conduisant à une réduction locale de la section de celui-ci.

2. Crayon selon revendication 1, caractérisé par le fait que la réduction locale de l'espace annulaire est obtenue par expansion locale (8, 9) du tube intérieur (2).

3. Crayon selon revendication 1, caractérisé par le fait que la réduction locale de l'espace annulaire est obtenue par écrasement local (15) de la gaine extérieure (1).

4. Crayon selon revendication 1, caractérisé par le fait que la réduction locale de la section de l'espace annulaire est obtenue à la fois par expansion locale (8, 9) du tube intérieur (2) et par écrasement local (15) de la gaine extérieure (1).

## Claims

1. Rod of consumable material for controlling a nuclear reactor, consisting of an outer tubular sheath (1) closed by a plug (6, 10) at each of its two ends, and comprising an inner axial tube (2) forming an annular space in which the consumable materials (3) are arranged in the form of tubes or annular pellets, characterised in that, over at least part of the length of the rod, the consumable material (3) is held axially in place by at least one stop consisting of a deformation (8, 9, 15) of the walls of the annular space, leading to a local reduction in the cross-section of the latter.

2. Rod according to Claim 1, characterised in that the local reduction of the annular space is obtained by local expansion (8, 9) of the inner tube (2).

3. Rod according to Claim 1, characterised in that the local reduction of the annular space is obtained by local crushing (15) of the outer sheath (1).

4. Rod according to Claim 1, characterised in that the local reduction in the cross-section of the annular space is obtained both by local expansion (8, 9) of the inner tube (2) and by local crushing (15) of the outer sheath (1).

## Ansprüche

1. Brennstab aus abbrennbarem Material zum Steuern eines Kernreaktors bestehend aus einer Aussenrohrhülse (1), die an ihren beiden Enden mit je einem Stopfen (6, 10) verschlossen ist, und ein axiales Innenrohr (2) aufweist das einen kreisförmigen Raum bildet, in welchem das abbrennbare Material (3) in Form von Rohren oder als runde Tabletten angeordnet ist, dadurch gekennzeichnet, daß über mindestens einen Teil der Brennstablänge, das abbrennbare Material (3) durch mindestens einen Anschlag in axialer Richtung festgehalten wird, der durch eine Verformung (8, 9, 15) der Wände des kreisförmigen Raumes gebildet wird, wodurch eine örtliche Querschnittsminderung desselben entsteht.

2. Brennstab nach Anspruch 1, dadurch gekennzeichnet, daß die örtliche Minderung des kreisförmigen Raumes durch eine örtliche Erweiterung (8, 9) am Innenrohr (2) erzielt wird.

3. Brennstab nach Anspruch 1, dadurch gekennzeichnet, daß die örtliche Minderung des kreisförmigen Raumes durch eine örtliche Beulung nach innen (15) der Aussenhülse (1) erzielt wird.

4. Brennstab nach Anspruch 1, dadurch gekennzeichnet, daß die örtliche Querschnittsminderung des kreisförmigen Raumes gleichzeitig durch eine örtliche Erweiterung (8, 9) am Innenrohr (2) und eine örtliche Beubung nach innen (15) der Aussenhülse (1) erzielt wird.

Fig1

Fig2

Fig3

Fig4